(19) Europäisches Patentamt
European Patent Office
Office européen des brevets

(11) Veröffentlichungsnummer: **0 332 754 B1**

(12) **EUROPÄISCHE PATENTSCHRIFT**

(45) Veröffentlichungstag der Patentschrift: **11.11.92**

(51) Int. Cl.[5]: **C09K 3/10**

(21) Anmeldenummer: **88120762.5**

(22) Anmeldetag: **13.12.88**

# (54) Einkomponentige Dichtungsmassen.

(30) Priorität: **18.03.88 DE 3809104**

(43) Veröffentlichungstag der Anmeldung:
**20.09.89 Patentblatt 89/38**

(45) Bekanntmachung des Hinweises auf die Patenterteilung:
**11.11.92 Patentblatt 92/46**

(84) Benannte Vertragsstaaten:
**BE CH DE FR GB IT LI NL SE**

(56) Entgegenhaltungen:
**EP-A- 0 194 361** **WO-A-86/07369**
**DE-A- 2 615 963** **GB-A- 137 177**
**US-A- 3 645 956** **US-A- 3 654 241**

(73) Patentinhaber: **RÜTGERSWERKE AKTIENGESELLSCHAFT**
**Mainzer Landstrasse 217**
**W-6000 Frankfurt am Main 1(DE)**

(72) Erfinder: **Bergmann, Franz-Josef, Dr.**
**Südring 63**
**W-6947 Laudenbach(DE)**
Erfinder: **Hockenberger, Lothar, Dr.**
**Brahmsstrasse 13**
**W-6700 Ludwigshafen(DE)**
Erfinder: **Schadt, Waltraut**
**Reutersgarten 6**
**W-6840 Lampertheim(DE)**

EP 0 332 754 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue, einkomponentige, feuchtigkeitshärtende Dichtungs- und Versiegelungsmassen auf der Basis von merkaptoendständigen Polymeren und/oder Oligomeren, sogenannte Polysulfidmassen.

Derartige Massen, die bei Raumtemperatur spritzfähig sind und die zu einem gummielastischen Produkt härten, spielen eine große Rolle bei technischen Abdichtungen und Verklebungen, bei denen die Klebe- oder Dichtstelle elastisch sein muß.

Sie kommen meist als Zweikomponentensysteme zur Anwendung, d. h. die Verbindung mit endständigen Merkaptogruppen einerseits und das Oxidationsmittel andererseits werden getrennt verpackt und gelagert, und kurz vor der Verarbeitung miteinander vermischt. Aus Gründen der vereinfachten und sichereren Anwendung wünschen immer mehr Verarbeiter einkomponentige Massen einzusetzen, d. h. lagerstabile Mischungen, die das Polymer und das Oxidationsmittel gleichzeitig enthalten und die bei der Verarbeitung bei Kontakt mit der Luftfeuchtigkeit bei Raumtemperatur härten.

Es sind Einkomponentensysteme auf der Basis verschiedener Oxidationsmittel wie Erdalkaliperoxid, Zinkperoxid, Chromat, Alkalipermanganat oder Bleidioxid bekannt. Jedes dieser Systeme hat bestimmte Vorteile, aber auch spezifische Nachteile. Die technisch besten einkomponentigen Dichtungs- und Versiegelungsmassen auf Basis merkaptoendständiger Verbindungen enthalten als Oxidationsmittel Mangandioxid.

Sie sind in gehärtetem Zustand weiche, dauerelastische Massen mit trotzdem großem Rückstellvermögen, und auch bei der Alterung dieser Massen tritt keine nennenswerte Verstrammung auf.

Leider lassen sich mit Mangandioxid keine weißen Massen herstellen. Von Seiten der Anwender, und insbesondere von Seiten der Architekten besteht aber ein verstärkter Bedarf an weißen, einkomponentigen Dichtungs- und Versiegelungsmassen.

Es sind bereits entsprechende einkomponentige Systeme bekannt, mit denen sich weiße Massen herstellen lassen.

So kennt man aus US-A-33 49 047 weiße Polysulfidmassen, die als latenten Härter ein Erdalkaliperoxid, meist Calciumperoxid verwenden. Diese Massen sind jedoch nach der Aushärtung für viele Abdichtungsanwendungen zu stramm. Man hat zwar versucht, den Elastizitätsmodul dieser Massen zu reduzieren, indem als sogen. Kettenstopper monofunktionelle Merkaptoverbindungen mit eingesetzt werden. Dadurch vermindert sich aber die innere Festigkeit und das Rückstellvermögen der Massen.

Weiße, einkomponentige Polysulfidmassen, die als Härter Zinkoxid oder Zinkperoxid enthalten, sind aus US-A-32 75 579, US-A-3402 155, US-A-34 99 864, DE-A-1800 982, DE-A-2062 259 und DE-A-2107 971 bekannt. Sie unterscheiden sich zwar jeweils in der Art des Aktivators für das Oxidationsmittel, haben aber alle ein gleiches Grundproblem: Die ausgehärteten Massen härten durch unerwünschte Sekundärreaktionen während der Alterung nach und verstrammen. Dieses Problem kann nicht durch Zugabe von Weichmachern gelöst werden.

Es ist daher Aufgabe der Erfindung, weiße, einkomponentige Dichtungs- und Versiegelungsmassen auf der Basis von merkaptoendständigen Polymeren und/oder Oligomeren bereitzustellen, die bei Kontakt mit der Luftfeuchtigkeit zu einem weichelastischen Produkt mit gutem Rückstellvermögen aushärten und wobei bei der Alterung der gehärteten Massen keine wesentliche Verstrammung auftritt.

Die Lösung der Aufgabe erfolgt durch einkomponentige, feuchtigkeitshärtende Dichtungs- und Versiegelungsmassen gemäß der Ansprüche 1-6, sowie durch ein Verfahren zu ihrer Herstellung gemäß Anspruch 7.

Es wurde gefunden, daß man eine lagerstabile Mischung erhält, wenn man wasserfreies, merkaptoendständiges Polymer und/oder Oligomer und ggf. wasserfreie Füll-und Zusatzstoffe und Weichmacher mit Natrium - oder Kaliumperborat-Monohydrat vermischt und diese Mischung unter Luft- und Feuchtigkeitsabschluß lagert, sofern die einzelnen Komponenten der Mischung so zusammengestellt sind, daß der Gehalt an Schwermetallen in der Gesamtmischung unter 0,01 % liegt.

Enthält die Mischung solche Weichmacher und Füll- und Zusatzstoffe, deren wäßrige Aufschlämmung oder wäßriger Extrakt neutral oder alkalisch ist, so bildet diese Mischung an der Luft (50 % rel. Feuchte) innerhalb von etwa zwei Stunden eine dünne Haut, und härtet innerhalb weniger Tage aus. Für die erfindungsgemäßen Dichtungs- und Versiegelungmassen sind alle flüssigen Polymere oder Oligomere oder Mischungen von oligomeren und polymeren Verbindungen mit mindestens zwei endständigen Merkaptogruppen. verwendbar, wie z. B. Polysulfidpolymere, polymere Thioäther u. dgl.

Die bevorzugten flüssigen, merkaptoendständigen Verbindungen sind Polysulfid-Polymere und -Oligomere der allgemeinen Formel $HS-(RSS)_n-RSH$, wobei n im Bereich von 5 bis 25 liegt und R einen Alkyl-, Alkyläther- oder Alkylthioätherrest darstellt. Der bevorzugte Rest R ist ein Bis-ethyl-formal-Rest der Formel

$-C_2H_4-O-CH_2-O-C_2H_4-$

Das Molekulargewicht dieser Verbindungen liegt, abhängig von der Zahl n und der Größe des Restes R im Bereich von 500 und 8000. Diese Polysulfid-Verbindungen haben bei Raumtemperatur eine Viskosität von 0,5 bis 80 Pa•s.

Als Alkaliperborat lassen sich das Kalium und das Natrium-Perborat-Monohydrat einsetzen. Es wurde gefunden, daß sich für die erfindungsgemäßen Massen weder das Tetra- noch das Trihydrat der Perborate, noch das Natriumperborat-Anhydrit (Oxoborat) eignen. Die Menge des eingesetzen Perborates muß mindestens der stöchiometrisch zur oxidativen Bildung von Disulfidbrücken aus den Merkaptogruppen notwendigen Menge entsprechen.

Es ist in der Technik üblich, in analogen Mischungen einen Überschuß in Höhe der mehrfachen stöchiometrisch notwendigen Menge an Oxidationsmittel zuzugeben, um die Aushärtungsgeschwindigkeit zu steigern. Im erfindungsgemäßen System wurde gefunden, daß die Härtungsgeschwindigkeit in weit geringerem Maße als bislang üblich vom Überschuß an Perborat abhängig ist. Vielmehr ist zu beachten, daß Perborate als empfindliche Oxidationsmittel leicht zur Zersetzung neigen. Die Menge des eingesetzten Alkaliperborat-Monohydrats soll daher die stöchiometrisch notwendige Menge nicht um mehr als 2 g/100 g merkaptoendständigen Polymers und/oder Oligomers übersteigen.

Wie jede Dichtungsmasse enthalten auch die erfindungsgemäßen neben dem Polymer-Härter-System beträchtliche Mengen an Weichmachern und Füll- und Zusatzstoffen. Da die Massen lagerstabile, aber feuchtigkeitshärtende Mischungen darstellen, müssen sie im wesentlichen wasserfrei sein. D. h., die Einsatzprodukte müssen im wesentlichen wasserfrei sein, und können zusätzlich während des Mischvorganges (unter Vakuum) weiter getrocknet werden. Normalerweise enthalten Weichmacher und flüssige merkaptoendständige Polymere oder Oligomere etwa 0,1-0,3 % Wasser. Der Wassergehalt normaler, handelsüblicher, trocken gelagerter Füllstoffe liegt mit Bereich von 0,2-0.5 %.

Es wurde gefunden, daß das erfindungsgemäße Einkomponentensystem hinsichtlich der Feuchtigkeit nicht allzu empfindlich ist, so daß nur eine mäßige Trocknung notwendig ist, auf die bei ausreichendem Einsatz eines handelsüblichen Trockenmittels sogar verzichtet werden kann. Andererseits gilt auch hier die allgemein bekannte Erfahrung, daß die Lagerstabilität umso besser ist, je geringer der Wassergehalt der Mischung ist. Es wurde gefunden, daß bei einem Wassergehalt der Mischung von 0,15-0,2 % eine Lagerstabilität von vier Wochen bei 70° C und eine Härtungsgeschwindigkeit (23° C/50 % r. F.) von 0,5 mm/d gegeben ist.

Weit empfindlicher reagiert das erfindungsgemäße System auf Spuren von Schwermetallen oder deren Salzen, die u. U. in den merkaptoendständigen Polymeren und in den Zusatzstoffen, vor allem in den Füllstoffen, vorhanden sind, und die sich beim Mischvorgang noch durch den Abrieb am Mischgerät erhöhen.

Schwermetalle in diesem Sinn sind die Metalle der 1., 6., 7. und 8. Nebengruppe des Periodensystems der Elemente, insbesondere: Eisen, Cobalt, Nickel, Kupfer, Vanadium, Mangan, Molybdän oder Wolfram. Derartige Schwermetalle oder Schwermetallionen katalysieren die Zersetzung des Perborats während der Lagerung der Dichtungsmasse, und reduzieren somit deren Lagerstabilität. Es wurde gefunden, daß einkomponentige Dichtungs- und Versiegelungsmassen auf Basis von merkaptoendständigen Polymeren und/oder Oligomeren mit Alkaliperborat-Monohydrat als latentem Härter bis zu 0,01 Gew.-% Schwermetall enthalten können. Erst wenn die Summe der katalytisch wirksamen Schwermetalle in der Gesamtmischung größer ist als 0,01 %, wird die Lagerstabilität empfindlich verkürzt. Die Masse ist dann zwar noch spritzfähig, härtet aber bei Feuchtigkeitszutritt nicht mehr aus.

Bei Zusammenstellung der Masse dürfen durchaus einzelne Komponenten einen erhöhten Schwermetallanteil enthalten, solange die angegebene Menge in der kompletten Mischung nicht überschritten wird. Dies ist insofern von Bedeutung, als viele natürliche Füllstoffe einen Schwermetall-, insbesondere Eisengehalt von 0,02-0,04 % haben und durchaus in die erfindungsgemäßen Massen eingesetzt werden können, wenn der Gesamt-Schwermetallgehalt nicht überschritten wird.

Es wurde weiterhin gefunden, daß die Zugabe von 0,05-2 Gew.-% eines Komplexbildners in die erfindungsgemäße Masse deren Lagerstabilität verbessert. Insbesondere zeigt sich, daß durch den Zusatz an Komplexbildner der durch den Abrieb der Mischmaschine eingebrachte Schwermetallanteil vernachlässigt werden kann. Wirksame Komplexbildner sind z. B. Alkali-Polyphosphate, Tetraacetylethylendiamin, Alkalisalze der Ethylendiaminotetraessigsäure oder Nitrilotriessigsäure, oder Verbindungen vom Typ des N-Salicyliden-ethylamins oder N,N'-Disalicyliden-ethylen- oder -triethylendiamins.

Als Füll- und Zusatzstoffe lassen sich erfindungsgemäß nur solche einsetzen, die neutral oder basisch sind. Als Maß für diese Acidität bzw. Alkalität dient der pH-Wert einer 10 %igen wäßrigen Lösung oder

Aufschlämmung bei Füll- und festen Zusatzstoffen oder der pH-Wert einer wäßrigen Lösung oder Extraktion bei Weichmachern und flüssigen Zusatzstoffen. Ist der pH-Wert einer derartigen Lösung oder Aufschlämmung oder eines derartigen Extraktes größer oder gleich 7, so ist der geprüfte Füll- oder Zusatzstoff einsetzbar. Einzige Ausnahme bilden die in geringen Mengen eingesetzten Verzögerer, wie z. B. Öl-, Stearin, Salicyl-, Zitronen-, Nitrilotriessig- oder Ethylendiaminotetraessigsäure - wobei die letzteren gleichzeitig als Komplexbildner und als Verzögerungsmittel wirken können.

Beispiele für verwendbare Füllstoffe sind Kreiden, Dolomit, Titandioxid, Schwerspat, Cellulose- oder Polyamidpulver. Beispiele für verwendbare feste Zusatzstoffe sind Erdalkalioxide oder -hydroxide, Molekularsiebpulver, Schwefelblüte, Bentonite sowie ggf. Pigmente, Reaktionsbeschleuniger oder Stabilisatoren. Beispiele für flüssige Zusatzstoffe sind Lösemittel, Haftmittel oder flüssige Stabilisatoren, Trocknungs- oder Antiabsetzmittel. Beispiele für einsetzbare Weichmacher sind Phthalate, Benzoesäureester, hydrierte Terphenyle oder hochsiedende Polyäther.

Die Massen werden hergestellt, indem handelsübliche, merkaptoendständige Polymere und/oder Oligomere, Füllstoffe, Weichmacher, Trockenmittel und ggf. Lösemittel, Haftvermittler, Pigmente, Komplexbildner, Beschleuniger, Thixotropier- und Verzögerungsmittel, die zusammen einen Schwermetallgehalt von weniger als 0,01 % haben, intensiv miteinander vermischt werden. Dieses Vermischen erfolgt bevorzugt unter Vakuum, wobei gleichzeitig eine Trocknung erfolgt.

Unabhängig davon werden Kalium- oder Natrium-Perborat-Monohydrat, sowie Barium- oder Strontiumoxid zusammen oder getrennt mit Weichmacher und ggf. weiteren Zusatzstoffen angepastet, und diese Paste oder Pasten werden mit der das Polymer und/oder Oligomer enthaltenden Mischung vermischt.

Erhalten wird eine spritzfähige, weiße Masse, die unter Luftabschluß bei Raumtemperatur mehrere Monate lang lagerstabil ist. Bei Kontakt mit feuchter Luft härtet die Masse innerhalb weniger Tage zu einem gummielastischen Produkt aus. Die gehärtete Masse zeigt bei der Alterung (nach DIN 18540) weder eine Verfärbung oder Vergilbung, noch eine wesentliche Erhöhung des Elastizitätsmoduls.

## Beispiele

Beispiel 1

Das in Beispiel 1 verwendete Polymer ist ein Polysulfid-Polymer der durchschnittlichen Struktur

$$HS\text{-}(C_2H_4\text{-}O\text{-}CH_2\text{-}OC_2H_4\text{-}SS)_{22}\text{-}C_2H_4\text{-}O\text{-}CH_2\text{-}O\text{-}C_2H_4SH$$

mit etwa 0,5 % Quervernetzung. Es hat ein mittleres Molekulargewicht von 4000 und eine Viskosität bei 27° C von 35-45 Pa•s. Alle Mengenangaben beziehen sich auf Gewichtsteile oder Gewichtsprozente.

Eine Grundmischung aus:
1000 Teilen Polymer
370 Teilen Benzylbutylphthalat
800 Teilen Kreide
350 Teilen Titandioxid (alkalisch)
5 Teilen Natriumphosphat
20 Teilen Molekularsiebpulver 3 A
25 Teilen Bentonit (Bentone® SD-2)
5 Teilen Toluol
wird im Planetenmischer 20 min unter Vakuum (600 pascal) intensiv gerührt.

Die erhaltene Mischung hat einen Wassergehalt von 0,15 %, und einen Schwermetallgehalt von etwa 0,005 %.

Zu dieser Mischung werden 235 g einer Paste gegeben, die aus:
10 Teilen Bariumoxid
30 Teilen Natriumperborat-Monohydrat
35 Teilen Kreide
160 Teilen Weichmacher (durch Vermischen am Dreiwalzenstuhl)
hergestellt worden war.

Die erhaltene thixotrope Masse wird in mehrere Portionen geteilt, mit denen folgende Versuche durchgeführt werden:

a. Ein Teil wird in einer Tube verschlossen bei 70° C gelagert. Die Masse ist noch nach einer Lagerzeit von drei Wochen einwandfrei.

b. Ein Teil wird zu Probekörpern (15x15x50 mm) nach DIN 18540 ausgespritzt und bei 23°-C und 50 %

relativer Feuchte offen gelagert. Die Masse hat nach 100 min eine dünne klebefreie Haut. Die Haut ist nach 1 d 1 mm stark. Nach 30 d ist die Probe zu einem gummielastischen Körper durchgehärtet.

Mit unter b hergestellten, gehärteten Probekörpern werden folgende Prüfungen durchgeführt:

| | |
|---|---|
| Zugspannung bei 100 % Dehnung nach Durchhärtung: | 0,2 $N/mm^2$ |
| Rückstellung nach 1 h Dehnung um 100%: | 85 % |
| Zugspannung bei 100 % Dehnung bei -20° C: | 0,26 $N/mm^2$ |
| Zugspannung bei 100 % Dehnung nach Alterung (DIN 18540): | 0,3 $N/mm^2$ |
| Verfärbung nach der Alterung: | keine |

Beispiele 2 und 3

Analog zu Beispiel 1, jedoch mit denen im folgenden angegebenen Änderungen, werden einkomponentige Dichtungsmassen mit folgenden merkaptoendständigen Verbindungen hergestellt.

Auch hier werden unter Luftabschluß lagerstabile, bei Zutritt von feuchter Luft härtende, weiße Massen erhalten, die auch bei der Alterung nicht verstrammen und vergilben.

Die im Beispiel 2 verwendete merkaptoendständige Verbindung ist ein oligomeres Polysulfid der durchschnittlichen Struktur:

$HS-(C_2H_4-O-CH_2-O-C_2H_4-SS)-C_2H_4-O-CH_2-O-C_2H_4-SH$

mit etwa 2 % Quervernetzung. Es hat ein durchschnittliches Molekulargewicht von 1000 und eine Viskosität bei 27° C von 0,7-1,2 Pa•s.

Aufgrund des höheren Gehaltes an SH-Gruppen werden 470 g der in Beispiel 1 angegebenen Paste zugegeben.

Die in Beispiel 3 verwendete merkaptoendständige Verbindung ist ein Polymercaptan der durchschnittlichen Struktur:

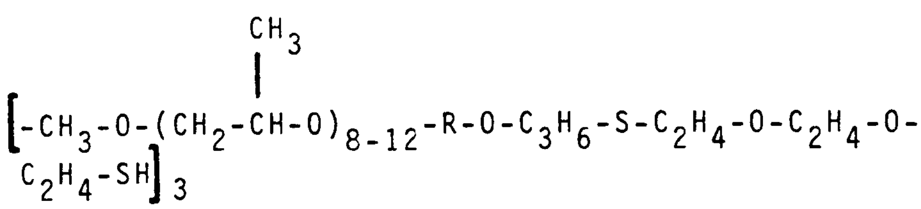

wobei R eine Aryldiamidgruppe bedeutet.

## Patentansprüche

1. Einkomponentige, feuchtigkeitshärtende Dichtungs-und Versiegelungsmassen auf Basis von merkaptoendständigen Polymeren und/oder Oligomeren und latenten Härtern, **dadurch gekennzeichnet,** daß die Massen einen Wassergehalt von maximal 0,2 % haben, daß sie als Härter Kalium- oder Natrium-Perborat-Monohydrat in einer Menge enthalten, die mindestens der stöchiometrisch zur oxidativen Bildung von Disulfidbrücken aus den Merkaptogruppen notwendigen Menge entspricht, daß sie als Beschleuniger ein Oxid des Bariums oder Strontiums, und als Füllstoffe, Weichmacher und Zusatzstoffe, mit Ausnahme eventueller Verzögerungsmittel nur solche enthalten, deren wäßrige Lösung oder Aufschlämmung oder wäßriger Extrakt neutral oder alkalisch ist, und die einen Schwermetallgehalt haben, der so gering ist, daß der Schwermetallgehalt der Gesamtmischung unter 0,01 % liegt.

2. Einkomponentige Dichtungs- und Versiegelungsmassen nach Anspruch 1, **dadurch gekennzeichnet,** daß der Gehalt an Alkaliperborat-Monohydrat die stöchiometrisch notwendige Menge nicht um mehr als 2 g/100 g des merkaptoendständigen Polymers und/oder Oligomers übersteigt.

3. Einkomponentige Dichtungs- und Versiegelungsmassen nach Anspruch 1 und 2, **dadurch gekennzeichnet,** daß sie zusätzlich 0,05-2 Gew.-% eines Komplexbildners enthalten.

4. Einkomponentige Dichtungs- und Versiegelungsmassen nach Anspruch 3, **dadurch gekennzeichnet,** daß der Komplexbildner ein Alkalisalz der Ethylendiaminotetraessigsäure der Nitrilotriessigsäure ist.

5. Einkomponentige Dichtungs- und Versiegelungsmassen nach Anspruch 3, **dadurch gekennzeichnet,** daß der Komplexbildner ein Alkali-Polyphosphat ist.

6. Einkomponentige Dichtungs- und Versiegelungsmassen nach Anspruch 3, **dadurch gekennzeichnet,** daß der Komplexbildner eine Verbindung vom Typ des N-Salicyliden-ethylamins oder N,N′-Disalicyliden-ethylen- oder -triethylendiamins ist.

7. Verfahren zur Herstellung von Dichtungs- und Versiegelungsmassen nach den Ansprüchen 1-6, **dadurch gekennzeichnet,** daß merkaptoendständige Polymere und/oder Oligomere, Füllstoffe, Weichmacher, Trockenmittel und ggf. Lösemittel, Haftvermittler, Pigmente, Komplexbildner, Beschleuniger, Thixotropier- und Verzögerungsmittel, die zusammen einen Schwermetallgehalt von weniger als 0,01 % haben, unter Vakuum intensiv miteinander vermischt und dabei getrocknet werden, daß unabhängig davon einerseits Kalium- oder Natrium-Perborat-Monohydrat, sowie Barium- oder Strontiumoxid mit Weichmacher angepastet werden, und daß diese Pasten mit der das Polymer und/oder Oligomer enthaltenen Mischung vermischt werden.

## Claims

1. Single-component, moisture-hardening packing and sealing compounds based on mercapto-terminal polymers and/or oligomers and latent hardeners, characterized in that the compounds have a water content of at most 0•2%, they contain a hardener in the form of potassium perborate monohydrate or sodium perborate monohydrate in a quantity corresponding at least to the quantity required stoichiometrically for forming disulphide bridges from the mercapto groups by oxidation, they contain an accelerator in the form of an oxide of barium or strontium, and fillers, softeners and additives, except for possible retarding agents, in the form of those whose aqueous solution or slurry or aqueous extract is neutral or alkaline, and which have a heavy-metal content which is so low that the heavy-metal content of the entire mixture is under 0•01%.

2. Single-component packing and sealing compounds according to Claim 1, characterized in that the content of alkali perborate monohydrate does not exceed the stoichiometrically required quantity by more than 2 g/100 g of the mercapto-terminal polymer and/or oligomer.

3. Single-component packing and sealing compounds according to Claims 1 and 2, characterized in that they additionally contain from 0•05 to 2% by weight of a complexing agent.

4. Single-component packing and sealing compounds according to Claim 3, characterized in that the complexing agent is an alkali salt of ethylenediaminetetraacetic acid of nitrilotriacetic acid.

5. Single-component packing and sealing compounds according to Claim 3, characterized in that the complexing agent is an alkali phosphate.

6. Single-component packing and sealing compounds according to Claim 3, characterized in that the complexing agent is a compound of the type of N-salicylidene-ethylamine or N,N'-salicylidene-ethylene- or triethylenediamine.

7. Process for preparing packing and sealing compounds according to Claims 1 to 6, characterized in that mercapto-terminal polymers and/or oligomers, fillers, softeners, drying agents and possibly solvents, bonding agents, pigments, complexing agents accelerators, thixotropic agents and retarding agents, which together have a heavy-metal content of less than 0•01%, are vigorously mixed together under vacuum and dried, and independently thereof potassium perborate monohydrate or sodium perborate monohydrate and barium oxide or strontium oxide are formed into pastes with a softener, and the said pastes are mixed with the mixture contain[ing] the polymer and/or oligomer.

## Revendications

1. Masses d'étanchéite et de scellement monocomposants durcissant par l'humidité à base de polymères et/ou d'oligomères comportant des groupes mercapto terminaux et de durcisseurs latents, caractérisées en ce que les masses possèdent une teneur en eau de 0,2% au maximum, qu'elles contiennent en tant que durcisseur du perborate de potassium ou de sodium monohydraté en une quantite correspondant au moins à la quantité stoechiométriquement nécessaire à la formation oxydative de ponts disulfure à partir des groupes mercapto, qu'elles contiennent en tant qu'accélérateur un oxyde de baryum ou de strontium et ne contiennent en tant que matières de charge, plastifiants et additifs, exception faite d'éventuels inhibiteurs, que ceux dont la solution ou la suspension aqueuse ou l'extrait aqueux est neutre ou alcalin et qui possèdent une teneur en métal lourd tellement faible que la teneur en métal lourd du mélange total est inférieure à 0,01%.

2. Masses d'étanchéite et de scellement monocomposants selon la revendication 1, caractérisées en ce que la teneur en perborate alcalin monohydraté ne dépasse pas la quantité stoechiométriquement nécessaire de plus de 2 g/100 g du polymère et/ou de l'oligomère comportant des groupes mercapto terminaux.

3. Masses d'étanchéité et de scellement monocomposants selon les revendications 1 et 2, caractérisées en ce qu'elles contiennent en outre 0,05 a 2% en poids d'un complexant.

4. Masses d'étanchéite et de scellement monocomposants selon la revendication 3, caractérisées en ce que le complexant est un sel alcalin de l'acide éthylénediaminotétraacétique ou de l'acide nitriloacétique.

5. Masses d'étancheité et de scellement monocomposants selon la revendication 3, caractérisées en ce que la complexant est un polyphosphate alcalin.

6. Masses d'étanchéite et de scellement monocomposants selon la revendication 3, caractérisées en ce que le complexant est un composé du type de la N-salicylidène-éthylamine ou de la N,N'-disalicylidéne-ethylène- ou triéthylènediamine.

7. Procédé pour la préparation de masses d'étanchéité et de scellement selon les revendications 1 à 6, caractérisé en ce que des polymères et/ou des oligomères comportant des groupes mercapto terminaux, des charges, des plastifiants, des desséchants et, éventuellement des solvants, des agents d'accrochage, des pigments, des complexants, des accélérateurs, des agents thixotropants et des inhibiteurs qui possèdent ensemble une teneur en métal lourd inférieure à 0,01% sont intensément malaxés sous vide et ainsi sechés, qu'indépendamment de cela, du perborate de potassium ou de sodium monohydraté d'une part, ainsi que de l'oxyde de baryum ou de strontium sont empâtés avec des plastifiants et que ces pâtes sont malaxées avec le melange contenant le polymère et/ou l'oligomère.